# EUROPÄISCHE PATENTSCHRIFT

(11) **EP 0 275 996 B1**
(45) Veröffentlichungstag und Bekanntmachung des Hinweises auf die Patenterteilung: **04.08.1993**
(21) Anmeldenummer: 88100795.9
(22) Anmeldetag: 20.01.1988
(51) Int. Cl.: H04M 1/02

(54) **Fernsprechhandapparatekörper mit einer die Bedienungseinrichtung verschliessbaren Klappe**
Handset for a telephone apparatus with a lid covering the keyboard
Combiné de poste téléphonique à couvercle cachant le clavier d'appel

(30) Priorität: 23.01.1987 DE 3701957
(43) Veröffentlichungstag der Anmeldung: 27.07.1988
(73) Patentinhaber: SIEMENS AKTIENGESELLSCHAFT, 80333 München (DE)
(72) Erfinder: Schön, Siegfried, D-8130 Starnberg (DE); Kéry, Bálint, Dipl.-Ing., D-8011 Hofolding (DE)

(56) Entgegenhaltungen:
- EP-A- 0 120 418
- GB-A- 2 158 328
- US-A- 4 471 493

## Beschreibung

Die Erfindung betrifft einen Fernsprechhandapparatekörper mit einer die im Mittelteil des Handapparatekörpers befindlichen mit Hilfe einer beweglichen Klappe verschließbaren Bedienungseinrichtung, wobei im Bereich des Scharniers der Klappe ein Mikrofon angeordnet ist.

Eine derartige Anordnung ist beispielsweise durch die deutsche Patentanmeldung DE-A- 33 46 492 bekannt. Bei dieser Anmeldung ist die Wähl- und Bedienungseinrichtung durch eine in einem Scharnier gelagerte Klappe abdeckbar, um bei Nichtgebrauch des Handapparatekörpers, der vorzugsweise ein schnurloses Telefon ist, eine Fehlbetätigung bei Nichtgebrauch auszuschließen. Die Klappe bewirkt dabei auch die Gabelumschaltung. Im Bereich des Scharniers ist im festen Teil des Handapparatekörpers eine Einsparung angeordnet, hinter der ein Mikrofon positioniert ist. Die Klappe ist nur bis zu einem gewissen Winkel aufklappbar, um das Mikrofon besser zu beschallen.

Eine ähnliche Anordnung ist auch ans der EP-A- 0 120 418 bekannt, wo das Scharnier einen Schallführungskanal in Form einer Querschnitts verminderung aufweist.

Da die Einsprechrichtung der Bedienungsperson dabei jedoch stark von der Einsprechrichtung des Mikrofons abweicht, ist eine optimale Beschallung des Mikrofons nicht gewährleistet.

Um dieses Problem zu lösen, könnte man das Mikrofon unmittelbar an der Innenseite der Klappe anordnen. Dabei entstehen jedoch wegen der elektrischen Zuführungen Schwierigkeiten, die die Funktionstüchtigkeit stark beeinträchtigen können.

Es ist Aufgabe der Erfindung, einen Lösungsweg aufzuzeigen, bei dem bei Beibehaltung der Lage des Mikrofons im festen Teil des Handapparatekörpers eine optimale Schallzuführung von der Bedienungsperson zum Mikrofon gewährleistet ist.

Diese Aufgabe wird gemäß der Erfindung dadurch gelöst, daß bei maximal geöffneter Klappe auf der Innenseite im Bereich der Einsprechrichtung zumindest eine Schalldurchlaßöffnung angeordnet ist, an die sich zumindest ein in der Klappe angeordneter Schallführungskanal anschließt, der durch das Scharnier der Klappe hindurchführt und im Bereich des Mikrofons endet.

Damit ist gewährleistet, daß dem Mikrofon im wesentlichen das Nutzsignal der Bedienungsperson zugeführt wird und daß damit Störungen durch fremde Geräusche weitestgehenst verringert werden. Somit ist das Nutzsignal-Geräusch-Verhältnis optimal, da nicht das ansonsten lediglich reflektierte Signal dem Mikrofon zugeführt wird.

Um fremde störende Signale auf dem Weg zum Mikrofon auszuschließen, kann es zweckmäßig sein, daß im Bereich des Scharniers zwischen beweglicher Klappe und der Handapparatekörper eine Dichtungsfolie angeordnet ist.

Im folgenden sei die Erfindung anhand von drei Figuren näher erläutert.

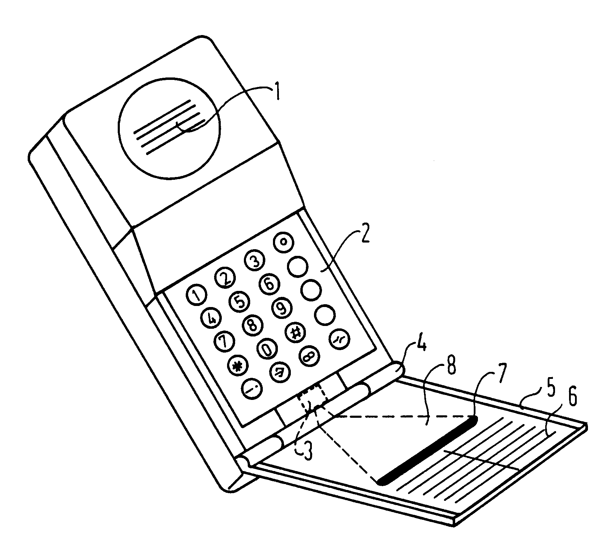

Es zeigen
FIG 1 eine perspektivische Ansicht eines schnurlosen Fernsprechers mit geöffneter Klappe
FIG 2 eine Seitenansicht eines schnurlosen Fernsprechers, im Bereich der Klappe geschnitten
FIG 3 eine Schnittansicht des Fernsprechers nach FIG 1 und 2 im Bereich der Klappe.

Der Fernsprecher nach den Figuren weist in seinem festen Teil eine Hörerfläche 1, eine sich daran anschließende Bedienungseinrichtung 2 sowie ein Mikrofon 3 auf. Das Mikrofon 3 ist im Bereich eines Scharniers 4 angeordnet, wobei das Scharnier die Lagerung einer die Bedienungseinrichtung verschließenden Klappe 5 bildet. Auf der Innenseite der Klappe 5 sind neben Hinweisen 6 wie Rufnummern etc. ein als Schalldurchlaßöffnung 7 ausgebildeter Einsprechschlitz sowie ein abgedeckter Schallführungskanal 8 angeordnet, der durch das Scharnier 4 zum Mikrofon 3 geführt ist.

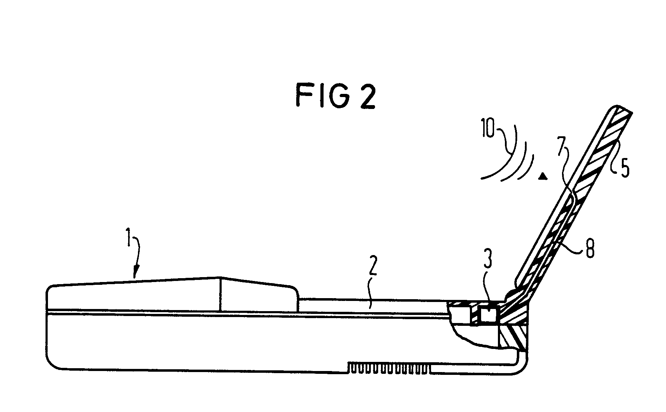

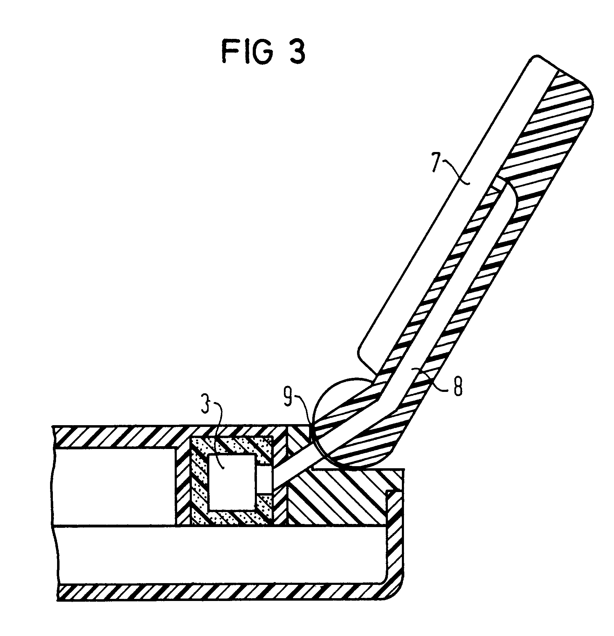

In den FIG 2 und 3 sind die für das Verständnis der Erfindung wesentlichen Teil gesondert dargestellt. Es ist besonders deutlich die Einsprechrichtung 10 sowie die Schalldurchlaßöffnung 7 erkennbar, an die sich der Schallführungskanal 8 anschließt. Dieser ist durch das Scharnier 4 zum Mikrofon 3 geführt. Um diesen Schallführungskanal 8 im Bereich des Scharniers 4 abzudichten, ist in das Scharnier eine Dichtungsfolie eingefügt.

## Patentansprüche

1. Fernsprechhandapparatekörper mit einer die im Mittelteil des Handapparatekörpers befindlichen mit Hilfe einer beweglichen Klappe verschließbaren Bedienungseinrichtung, wobei im Bereich des Scharniers der Klappe ein Mikrofon angeordnet ist,
**dadurch gekennzeichnet**, daß bei maximaler geöffneter Klappe (5) auf der Innenseite im Bereich der Einsprechrichtung zumindest eine Schalldurchlaßöffnung (7) angeordnet ist, an die sich zumindest ein in der Klappe (5) angeordneter Schallführungskanal (8) anschließt, der durch das Scharnier (4) der Klappe (5) hindurchführt und im Bereich des Mikrofons (3) endet.

2. Fernsprechhandapparatekörper nach Anspruch 1, **dadurch gekennzeichnet**, daß im Bereich des Scharniers (4) zwischen beweglicher Klappe (5) und der Handapparatekörper eine Dichtungsfolie (9) angeordnet ist.

## Claims

1. Telephone handset with an operating device which is located in the centre part of the handset and can be closed by means of a moving flap, a microphone being arranged in the area of the hinge of the flap, characterised in that when the flap (5) is opened to its maximum extent, at least one sound transmission opening (7) is arranged on the inside in the area of the speaking-in direction, which opening is followed by at least one sound-guiding duct (8) arranged in the flap (5), which passes through the hinge (4) of the flap (5) and ends in the area of the microphone (3).

2. Telephone handset according to Claim 1, characterised in that a sealing foil (9) is arranged between moving flap (5) and handset in the area of the hinge (4).

## Revendications

1. Combiné de poste téléphonique comportant un dispositif de commande situé dans la partie médiane du combiné et pouvant être fermé au moyen d'un volet mobile, un microphone étant disposé au voisinage de la charnière du volet, caractérisé par le fait que, le volet (5) étant ouvert au maximum, sur le côté intérieur est disposée, dans la zone de la direction vers laquelle on parle, au moins une ouverture (7) de passage du son, à laquelle se raccorde au moins un canal (8) de guidage du son, qui est situé dans le volet (5) et qui traverse la charnière (4) du volet (5) et se termine au voisinage du microphone (3).

2. Combiné pour appareil téléphonique suivant la revendication 1, caractérisé par le fait qu'une feuille d'étanchéité (9) est disposée au niveau de la charnière (4), entre le volet mobile (5) et le corps du combiné de préhension.
